**Europäisches Patentamt**

(19) **European Patent Office**

**Office européen des brevets**

(11) Publication number: **0 006 662**
**B1**

(12) **EUROPEAN PATENT SPECIFICATION**

(45) Date of publication of patent specification: **27.01.82**

(51) Int. Cl.³: **G 02 B 7/26**

(21) Application number: **79200320.4**

(22) Date of filing: **20.06.79**

(54) Detachable connector for optical fibres.

(30) Priority: **26.06.78 NL 7806829**

(43) Date of publication of application:
**09.01.80 Bulletin 80/1**

(45) Publication of the grant of the European patent:
**27.01.82 Bulletin 82/4**

(84) Designated Contracting States:
**BE DE FR GB NL SE**

(56) References cited:
**DE - A - 2 522 740**
**DE - A - 2 546 861**
**FR - A - 2 331 803**
**FR - A - 2 334 969**
**FR - A - 2 344 857**
**GB - A - 1 429 843**

(73) Proprietor: **N.V. Philips' Gloeilampenfabrieken**
**Pieter Zeemanstraat 6**
**NL-5621 CT Eindhoven (NL)**

(72) Inventor: **Nicia, Antonius Josephus Adrianus**
**c/o INT. OCTROOIBUREAU B.V. Prof. Holstlaan 6**
**NL-5656 AA Eindhoven (NL)**
Inventor: **Potters, Cornelis Johannes Theresia**
**c/o INT. OCTROOIBUREAU B.V. Prof. Holstlaan 6**
**NL-5656 AA Eindhoven (NL)**

(74) Representative: **Faessen, Louis Marie et al,**
**INTERNATIONAAL OCTROOIBUREAU B.V. 6 Prof.**
**Holstlaan**
**NL-5656 AA Eindhoven (NL)**

## Detachable connector for optical fibres

The invention relates to a detachable connector for coupling the ends of optical fibres, comprising two connector portions, each comprising fixing means for detachably connecting the connector portions to each other, a rotationally-symmetrical housing and a rotationally-symmetrical bush for an optical fibre, the housing being provided with a hole which is coaxial to a central axis of the housing and also with a reference face on one end directed transversally to the central axis so that the interconnected connector portions contact each other on the reference faces.

Connectors of the kind which can be quickly detached are known from the French Patent Application Publication No. 2,331,803 and are used in optical communication systems in which data are transmitted, via optical fibres, from one location to another in the form of light pulses. For data transmission, the signal to be transmitted, in this case light pulses, should be attenuated as little as possible. One of the causes of the signal attenuation occurring in an optical communication system is formed by the connectors required for coupling the optical fibres used. Therefore, any signal attenuation caused by the connectors should be minimized. Because the optical fibres to be coupled have an effective diameter (the light conductive core of the fibres) of 100 $\mu$m and smaller it is proposed in the French Patent Application to use lenses in the connector in order to satisfy the requirement that the light conductive cores of the optical fibers must be substantially exactly aligned and must show only a small distance (some $\mu$m) between the fiber-endfaces. If lenses are used in a fiberconnector then each fiber-endface must be in the focal plane of a lens and the optical axis of the fiber should be properly aligned with the optical axis of the lens. For good coupling efficiency the optical axes of the lenses should coincide or should at least be parallel and show only a small spacing.

The connector as disclosed in the cited French Patent Application shows two connector portions, each of which may comprise a housing for accommodating an aspherical lens, a bush for accommodating a portion of a fiber and a lid for fixing the bush in said housing. If the lens or the lid is slightly tilted mounted in the housing or if the bush containing the portion of the fiber is slightly tilted relative to the lid then a substantial reduction of coupling efficiency will result. This means that several components of the proposed connector must be manufactured and assembled very accurately in order to obtain a proper positioning of the fiber endface relative to the lens and a proper alignment of the optical axes of the lens and the fiber. This makes the connectors as shown in the cited French Patent Application expensive and complicated, which is of course a disadvantage.

However, for practical reasons optical communication systems require connectors which are easy to handle and which are not too expensive.

One object of the present invention is to provide a connector which is easy to handle, and which requires only standard manufacturing precision, so that it is not expensive.

According to the present invention there is provided a detachable connector for coupling the ends of optical fibres, characterized by a seat formed in the hole at the end near the reference face, said seat facing the end of the housing which is remote from the reference face, and accommodating a ball lens which is retained by a seat provided in the front side of the bush which bears against the ball lens and which is supported at the end remote from the seat by adjusting means secured in the housing, said adjusting means enabling the optical axis of a portion of the optical fibre accommodated in the bush to be adjusted coaxially with or parallel to the central axis of the housing.

The use of a bush provided with a seat for the ball lens results in an alignment of the optical axes of the portion of the fiber in the bush and of the ball lens fixed in said seat. Further the lens is kept in a second seat provided in the housing. So the lens will act as a pivot point if the bush is adjusted relative to the housing in order to point the optical axes of the fiber and the lens perpendicular to the reference face. Thereby the optical alignment of the fiber and lens will not be affected. The above described set up of a connector portion offers the advantage that when two housings have been arranged one on the other by way of their reference faces, the optical axes extend at least parallel to each other. The losses then occurring are reduced by the use of ball lenses, because the light beam emerging from a ball lens is substantially non-divergent, with the result that the light emerging from the end face of the one fibre is focussed substantially completely onto the end face of the other fibre, with the exception of any loss which occurs due to divergence and of any quantity of light which falls outside the lens due to the distance between the central axes of the housings which is caused by tolerances. The losses which occur due to reflections from lens surfaces and the like can be restricted in known manner by the use of anti-reflective coatings and by using, for example, a coupling liquid which is to be introduced between the lens and the fibre and which has a refractive index adapted to the refractive index of the lens and the core of the optical fibre.

Furthermore, the end faces of the fibres are located inside the housing, with the result that the risk of damaging or contamination of the end faces is eliminated. Damage to or slight contamination of the lens surface is less critical in view of the magnitude of the lens surface with respect to the surface of the end faces of the fibres. Furthermore, each lens is situated completely inside the housing, so that the risk of damaging is substantially nil.

In one embodiment the housing is shaped as a tube on which a flange is formed, the side of said flange which is remote from the housing being provided with an abutment edge which forms the reference face.

An example of the connector will now be described in more detail with reference to the accompanying diagrammatic drawing.

Fig. 1 shows a principle used in the connector,

Fig. 2 is a sectional view of embodiments of connector portions of a connector in accordance with the invention, and

Fig. 3 shows a device for aligning an end of a fibre secured in a connector portion with respect to a central axis of the connector portion of a connector in accordance with the invention.

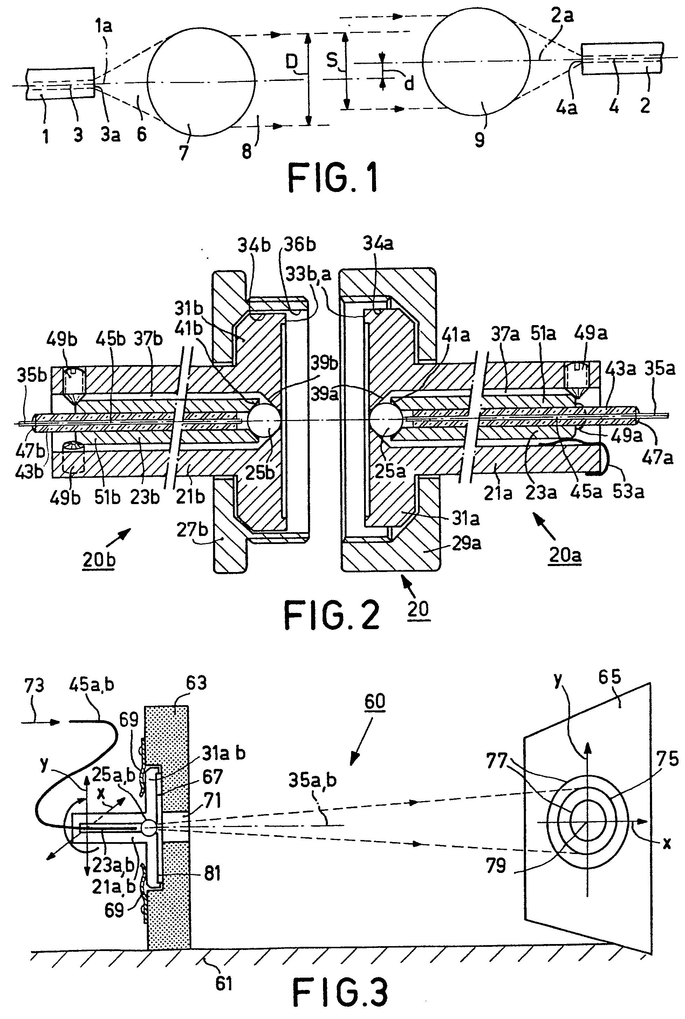

Fig. 1 shows two ends 1, 2 of optical fibres. The optical axes 1a and 2a are assumed to be parallel and are offset a distance $d$ from each other, which distance may be in the order of magnitude of the optical cores 3, 4 (100 $\mu$m) of the optical fibres 1, 2. If the fibres 1 and 2 were directly coupled to each other, the end faces 3a and 4a then being arranged one opposite the other while maintaining such an offset distance, the transmission of light from the light conductive core 3 to the core 4 (the coupling efficiency), or vice versa, would be (substantially) nil. The light beam 6 emitted by the fibre core 3 is refracted by a ball lens 7 to form a substantially parallel light beam 8 having a diameter D, because the focal point of the lens 7 is situated in the end face 3a. Similarly, the focal point of the ball lens 9 is situated in the end face 4a. The diameter D exceeds the diameter of the light-conductive core 3 by a factor 20 to 100. A part S of the beam 8 formed by means of the lens 7 is then projected, *via* the lens 9, onto the light-conductive core 4. It will be obvious that as a result of the use of such an arrangement of the lenses 7 and 9 and the end faces 3a and 4a, a better coupling efficiency can be achieved in comparison with a direct coupling between the fibre ends 1 and 2. However, the optical axes 1a and 2a must be parallel. If the optical axes 1a and 2a coincide, the coupling efficiency is optimum.

The connector *20* shown in Fig. 2 comprises two connector portions *20a* and *20b* which are substantially identical. Each connector portion *20a, b* comprises a rotationally-symmetrical housing 21a, b, a rotationally-symmetrical bush 23a, b and a ball lens 25a, b. The connector portions *20a* and *b* can be connected to each other by means of a union 27 and a nut 29a, the housings 21a and b then contacting each other by way of the abutment edges 33a and b formed on flanges 31a and b. The abutment edges 33a, b are directed transversally to the central axis 35a, b of the housings 21a, b, respectively. The outerwall 34a, b of the flanges 31a, b is adapted to the diameter of the inner wall 36b of the union 27b with a precision which can be achieved on a normal lathe, with the result that the central axes 35, b are at least parallel to each other and are situated a short distance from each other, at the most.

Each housing 21a, b comprises a hole 37a, b which is coaxial with the central axis 35a, b and which comprises a seat 39a, b at the side of the flange 31a, b. The lens 25a, b is pressed against the seat 29a, by way of the bush 23a, b which is provided with a seat 41a, b for this purpose. A hole in the bush 23a, b accommodates a capillary 43a, b in which an optical fibre 45a, b is secured. The fibre 45a, b is secured by means of an epoxy resin setting 47a, b.

As has already been described with reference to Fig. 1, the ends of the optical fibres 45a, b should be adjusted to be parallel to the central axis 35a, b. The housing 21b is provided with three adjusting screws 49b (only two screws are shown in the figure) for this purpose, said screws locating and positioning the bush 23b in the hole 37b. The end 51b of the bush 23b can be displaced transversely to the central axis 35b by adjustment of the three adjusting screws 49b, the ball lens 25b then serving as a bearing for the bush 23b.

In the connector portion 20a, the end 51a of the bush 23a can be independently adjusted in two directions, transversely to the central axis 35a. In each of the two directions indicated, the bush 23a is located between an adjusting screw 49a and a leaf spring 53a which presses the bush 23a against the adjusting screw 49a. As a result, the desired position of the bush 23a can be obtained already by two adjusting operations.

The adjusting screws 49a, b and the bushes 23a, b comprise bevelled edges on their contacting faces, location of the bushes 23a, b in the direction of the central axis 35a, b thus also being realised.

Fig. 3 shows a device *60* whereby a connector portion *20a, b* of a connector *20* as shown in Fig. 2 can be adjusted. The adjustment involves

a. adjustment of the correct distance between the lens and the end face of a fibre end, and

b. alignment of the bush with respect to the central axis of the connector portion.

The device *60* comprises a base plate 61 on which there are arranged a holder 63 as well as a screen 65 at a distance therefrom. The holder 63 comprises a recess 67 in which the flange 31a, b of the housing 21a, b fits. The housing 21a, b is retained in the holder 63 by clamping springs 69. The holder 63 furthermore comprises a hole 71 which opens into the recess 67. Light radiated into the optical fibre 45a, b (denoted by an arrow 73) is projected onto the screen *via* the ball lens 25a, b. In the capillary 43a, b (see Fig. 2), the fibre 45a, b is slid towards the lens 25a, b until the focal point of the lens 25a, b is situated at least substantially in the end face of the fibre 45a, b; this can be observed on the basis of the image 75 of the light via the lens 25a, b on the screen 65. Subsequently, the fibre 45a, b is glued in the capillary 43a, b.

After the fibre 45a, b has been secured, the end 51a, b of the bush 23a, b is displaced in the x-direction and the y-direction, so that the image 75 can be symmetrically situated in a target 77 drawn on the screen 65. The centre 79 of the target 77 is situated in the prolongation of a central axis 35a, b of the housing 21a, b to be positioned in the recess 67. The end of the fibre 45a, b extends parallel to the central axis 35a, b if no displacement of the image 75 occurs when the housing 21a, b is rotated about the central axis 35, b in the recess 67.

Due to dimensional tolerances of the diameter of the flange 31a, b, the central axis 35a, b of the housing 21a, b will not always be directed onto the centre 79 of the target 77. In order to enable exact adjustment to be realised, the recess is preferably V-shaped at the lower slide 81, so that the central axis 35a, b can occupy different positions only in the y-direction. The screen 65 or the holder 63 can be displaced in the y-direction. The screen 65 or the holder 63 can be displaced in the y-direction, so that the central axis 35a, b can be directed onto the centre 79 again by a few simple operations. However, it has been found that the manufacture of the housings 21a, b with standard precision offers a flange 31a, b with a diameter which is sufficiently accurate to make readjustment of the screen 65 or the holder 63 with respect to each other superfluous.

## Claims

1. A detachable connector for coupling the ends of optical fibres, comprising two connector portions, each comprising fixing means for detachably connecting the connector portions to each other, a rotationally-symmetrical housing and a rotationally-symmetrical bush for an optical fibre, the housing being provided with a hole which is coaxial to a central axis of the housing and also with a reference face on one end directed transversely to the central axis so that the interconnected connector portions contact each other on the reference faces, characterized by a seat formed in the hole at the end near the reference face, said seat facing the end of the housing which is remote from the reference face, and accommodating a ball lens which is retained by a seat provided in the front side of the bush which bears against the lens and which is supported at the end remote from the seat by adjusting means secured in the housing, said adjusting means enabling the optical axis of the portion of the optical fibre accommodated in the bush to be adjusted coaxially with or parallel to the central axis of the housing.

2. A connector as claimed in Claim 1, characterized in that the housing is shaped as a tube on which a flange is formed, the side of said flange which is remote from the housing being provided with an abutment edge which forms the reference face.

## Revendications

1. Raccord démontable servant à coupler les extrémités de fibres optiques, comprenant deux parties de raccordement qui comportent chacune des moyens de fixation servant à raccorder ces deux parties l'une à l'autre d'une manière permettant leur démontage, un boîtier à symétrie de révolution et une douille à symétrie de révolution pour une fibre optique, le boîtier présentant une perforation coaxiale à un axe central et une face de référence sur une extrémité orientée transversalement à son axe central de sorte que les parties de raccordement assemblées sont en contact l'une avec l'autre par les faces de référence, caractérisé par un siège formé dans la perforation à l'extrémité proche de la face de référence, ce siège étant orienté vers l'extrémite du boîtier qui est éloignée de la face de référence et recevant une lentille sphérique qui est retenue par un siège prévu dans la face antérieure de la douille qui porte contre la lentille sphérique et est supportée, à son extrémité éloignée du siège, par des moyens de réglage fixés à l'intérieur du boîtier et à l'aide desquels l'axe optique d'une partie de la fibre optique logée dans la douille peut être réglé coaxialement à l'axe centrale du boîtier ou parallèlement à celui-ci.

2. Raccord suivant la revendication 1, caractérisé en ce que le boîtier a la forme d'un tube sur lequel est formée une joue dont le côté qui est éloigné du boîtier présente un bord d'arrêt qui forme la face de référence.

## Patentansprüche

1. Schnellkupplung für Lichtleitungsfasern mit zwei Kupplungsteilen, die jeweils Befestigungsmittel zum abnehmbaren Befestigen der Kupplungsteile miteinander, ein rotationssymmetrisches Gehäuse und eine rotationssymmetrische Buchse für eine Lichtleiterfaser enthalten, wobei das Gehäuse mit einer zu einer Zentralachse des Gehäuses koaxialen Durchbohrung und an einem Ende mit einer quer zur Zentralachse gerichteten Referenzfläche versehen ist, so dass die miteinander verbundenen Kupplungsteile sich einander an den Referenzflächen berühren, dadurch gekennzeichnet, dass in der Durchbohrung am Ende der Referenzfläche ein Sitz für eine kugelförmige Linse gebildet ist, der auf das der Referenzfläche abgewandten Ende des Gehäuses gerichtet ist und dass die Buchse mit einem an ihrer Vorderseite gebildeten Sitz an die Linse anliegt und mit ihrem dem Sitz abgewandten Ende auf einem im Gehäuse befestigten Einstellmittel abgestützt ist, sodass durch die Einstellmittel die optische Achse des Teils der in der Buchse angebrachten Lichtleitfaser koaxial oder parallel zur Zentralachse des Gehäuses einstellbar ist.

2. Kupplung nach Anspruch 1, dadurch gekennzeichnet, dass das Gehäuse eine Rohrform hat, an dem ein Flansch gebildet ist, der an einer dem Gehäuse abgewandten Seite mit einem Anliegerand versehen ist, der die Referenzfläche bildet.

FIG.1

FIG.2

FIG.3